# EUROPEAN PATENT APPLICATION

(11) **EP 4 580 045 A1**
(43) Date of publication of application: **02.07.2025**
(21) Application number: 23220417.2
(22) Date of filing: 27.12.2023
(51) Int. Cl.: H02S 50/10

(54) **PHOTOVOLTAIC DEVICE AND METHOD FOR MANUFACTURING THE SAME**

(71) Applicant: Meyer Burger (Germany) GmbH, 09337 Hohenstein-Ernstthal (DE)
(72) Inventor: BÄTZNER, Derk, 3232 Ins (CH); PAPET, Pierre, 2068 Hauterive (CH); FRICK, Nicolas, 2013 Colombier (CH)
(74) Representative: Bovard SA Neuchâtel

(57) **Abstract**

The invention relates to a measurement apparatus (200) for measuring the current and voltage characteristics of a photovoltaic cell (100). The apparatus (200) comprises a support member (202) that comprises, arranged on said front surface (201), in the direction of a lateral axis (X), a repetitive pattern (2000) of groups (210, 220, 230) of electrically separate probing tracks (212, 214, 216, 222, 224, 226, 232, 234, 236) that extend over a length (L1, L2, L3). Each group (210, 220, 230) comprises at least two probing tracks (212, 214, 222, 224, 232, 234), possibly at least three probing tracks (212, 214, 216, 222, 224, 226, 232, 234, 236).

The invention relates also to a measurement apparatus (200) wherein the support member (202) comprises, along said lateral axis (X), a repetitive pattern (3000) of groups (310, 320, 330) of separate probing tracks (312, 314, 322, 324, 332, 334), each group (310, 320, 330) extending over a length (L1, L2, L3) and comprising in the longitudinal direction (Y) a series of at least two electrically isolated probing tracks (312, 314),(322, 324), (332, 334).

The invention relates also to a test system (1) comprising a photovoltaic cell (100) and a measurement apparatus (200), and also relates to a method to measure photovoltaic cells (100) with such measurement apparatus (200).

## Description

### Technical Field

The present invention relates to the field of photovoltaic devices. The invention relates more specifically to a measurement apparatus and a method for testing wafers for photovoltaic devices.

### Background of the invention

Semiconductor wafers for photovoltaic devices are thin slices of silicon comprising different doped regions from which, in operation of the devices, negative and positive electrical charges are collected by collecting electrodes.

Such semiconductor wafers must be carefully inspected for electrical values varying over the surface of the wafers. In a typical apparatus for inspecting photovoltaic wafers, the wafer is adapted to a measurement device and a probe tip is normally used to contact the surface of the semiconductor wafer. In typical measurement devices different tests are performed that consists of applying stimuli to the wafer. Typical stimuli are of the type: capacitance-voltage (CV), current-voltage (IV), conductance-voltage (GV), capacitance-time (CT) or other electrical stimuli. The response of the photovoltaic wafer to the electrical stimuli is measured and, from the response, at least one property of the photovoltaic wafer is measured.

Prior art test devices for photovoltaic wafers may be realized by a measurement chuck that comprises contact tracks such as for example disclosed in WO2014013350A1 or WO2015151049A1.

The problem related to such measurement devices is that there is a risk of not contacting all the collecting electrodes and/or that the contact with the collecting electrodes is not performed firmly leading to non -reliable measurements.

Another problem related to prior art test devices is that continuous contact tracks do not allow to measure and test different types and different complexities of polarity arrangements of a cell structure on a wafer. A single contact track is furthermore not fail-safe against erronous contacting of badly positionned charge collecting cells. For example, single track test systems may suffer from effects of floating potential when only a part of the cell contacts the electrical potential probing.

There is thus a need for a more robust test system that should assure a better contact between the test tracks and the charge collectors of a photovoltaic cells and that should be more tolerant against variations in the charge collector positionings, espially for production automation of photovoltaic devices.

### Summary of the invention

The present invention relates to a measurement apparatus and a system to characterize photovoltaic devices and allows to alleviate the disadvantages of the prior art.

In particular, the invention allows to provide a test device for photovoltaic devices that ensures firm electrical contact with the photovoltaic device to be measured. The measurement apparatus of the invention also allows to provide a test system that has an excellent displacement tolerance between the contacting test electrodes and the charge collectors of the to-be-tested photovoltaic device. The measurement apparatus and system of the invention is also tolerant for variations in the positioning of the charge collectors in the photovoltaic devices, for example due to slight design errors. The measurement apparatus of the invention not only provides a test system that is more reliable, but also provides means to reduce the cost of fabrication of photovoltaic devices because less devices are rejected during the test process.

In a first aspect the invention is achieved by a measurement apparatus for measuring the current and voltage characteristics of a photovoltaic cell, the measurement apparatus comprising a support member defining a front surface and a back surface opposite to said front surface, and an edge area to the side of said front surface defined on a whole circumference of the support member, the support member defining a longitudinal axis Y and a lateral axis X orthogonal to said longitudinal axis Y. In this first aspect, the support member comprises, arranged on said front surface and in the direction of said lateral axis X, a repetitive pattern of groups of electrically separate contact electrodes, also defined as probing tracks or measurement electrodes, that extend over a length L1, L2, defined along said longitudinal axis Y, each group comprises at least two contact electrodes as probing tracks.

In an embodiment of said first aspect, each group comprises at least three contact electrodes. In an advantageous embodiment, one contact electrode of each group has a wider width w2a than the width w2b of the other contact electrode or electrodes, the widths w2a, w2b being defined in the lateral direction X.

In a second aspect, the invention is also achieved by a measurement apparatus for measuring the current and voltage characteristics of a photovoltaic cell, the measurement apparatus comprising a support member defining a front surface and a back surface opposite to said front surface, and an edge area to the side of said front surface and on a whole circumference of the support member, the support member defining a longitudinal axis Y and a lateral axis X orthogonal to said longitudinal axis Y.

In said second aspect, the support member comprises, along said lateral axis X, a repetitive pattern of groups of separate contact electrodes each group extending over a length L1, L2, L3 defined along said longitudinal axis Y, and comprising, in the longitudinal direction Y, a series of at least two electrically isolated probing tracks.

In an embodiment of said second aspect of the invention, said series of separate probe tracks comprises first wide contact electrodes having a greater width w3a than the width w3b of the thinner measurement electrode, the widths w3a, w3b being defined in the lateral X direction. In such an embodiment, the thinner measurement electrode of each couple of contact electrodes faces, in the longitudinal direction Y, the wider contact electrode of the adjacent couple of contact electrodes.

In a variant of said second aspect, each group comprises at least three different types of contact electrodes.

In advantageous embodiments, the support member is a PCB (Printed Circuit Board).

In embodiments, the support member comprises embedded electrical contact paths that are connected by electrically conducting vias V1, V2, V3 to said groups of contact electrodes.

In embodiments, said embedded electrical contact paths are arranged in said contact member in at least two different depth levels L1, L2, L3, L4, each depth level being defined at a predetermined depth relative to said front surface, each electrical contact path being electrically contacted to said contact electrodes through said electrically conducting vias.

In an embodiment, said embedded electrical contact paths extend up to at least one side of the support member, providing at said side lateral electrical probing contacts C1-C4 to perform current and voltage measurements of a photovoltaic device. In variants different probing contacts may be arranged on different sides of a support member.

In an embodiment, the support member has at least one opening configured to be connected, by vacuum connecting means, with a vacuum pump.

In an embodiment, the support member comprises, arranged on said edge area, a sealing member configured to assure a vacuum between the support member and a photovoltaic cell to be tested, the sealing member being chosen preferably among: a polymer film, a resist, a paint, silicone, and having a thickness, defined perpendicular to said front surface, comprised between 1µm and 200µm, preferably between 1 µm and 70 µm.

It is understood that, in the current invention, sealing members of the measurement device and the test system may be sealing parts or gaskets or sealing parts that may be deposited and/or structured layers that are deposited on a surface of a component of the measurement apparatus to assure a sufficient force between the photovoltaic device and the support member and/or between the support member and a support chuck. In variants of the test system, a sealing part, such as a removable ring, may be arranged to the photovoltaic device, so as to enclose the n and p electrode arrays of the photovoltaic device.

The advantage of all the embodiments and variants of said first and second aspect of the invention is that it provides a more robust test system that should assure a better contact between the test tracks and the charge collecting contacts of a photovoltaic cell and that should be more tolerant against variations in thealignment of the photovoltaic cell and the measurement system, especially for production automation of photovoltaic devices.

In another aspect, the invention is achieved by a test system comprising the measurement apparatus as described herein and a photovoltaic cell to be measured, as described herein.

In an embodiment of the test system, the total width wt of each group of electrodes, comprising the width of the gaps between said electrodes, is smaller than the width of the n and p charge collectors of the photovoltaic cell. The total width wt is defined in the longitudinal direction X.

The invention is also achieved by a method to characterise IBC (Interdigitated Back Contact) photovoltaic cells, where positive and negative charge collecting contacts are on the rear side of the cell, comprising the steps of:
- providing a photovoltaic cell, defining a longitudinal axis Y' and a lateral axis X' orthogonal to said longitudinal axis Y', and comprising a repetitive pattern, defined in the direction of the lateral axis X', of successive arrays or paths of n-type and p-type electrodes, the arrays being arranged in the longitudinal direction Y';
- providing a measurement apparatus as described herein;
- aligning the longitudinal axes Y, Y' and said lateral axes X, X' of said measurement apparatus and said photovoltaic cell and assuring that the probing tracks are in contact with at least a portion of the n and p electrodes of the photovoltaic cell;
- applying a force F between said photovoltaic cell and said support member so that the measurement electrodes of said contact member, such as a PCB, come into electrical contact with the n-type and p-type electrodes of the photovoltaic cell;
- realising the current and voltage characteristics of the photovoltaic cell by the current and voltage signals delivered through the probing tracks.

It is understood that current and voltage are provided by a power supply that is part of the measurement system.

In an embodiment, the force F is applied by providing a vacuum between said photovoltaic cell and the front surface of said support member. In variants, the force F may be applied by other mechanisms such as a mechanical clamping system including clipping or clamping elements, or springs.

### Brief description of the drawings

The present invention will now be described in reference to the enclosed drawings where:

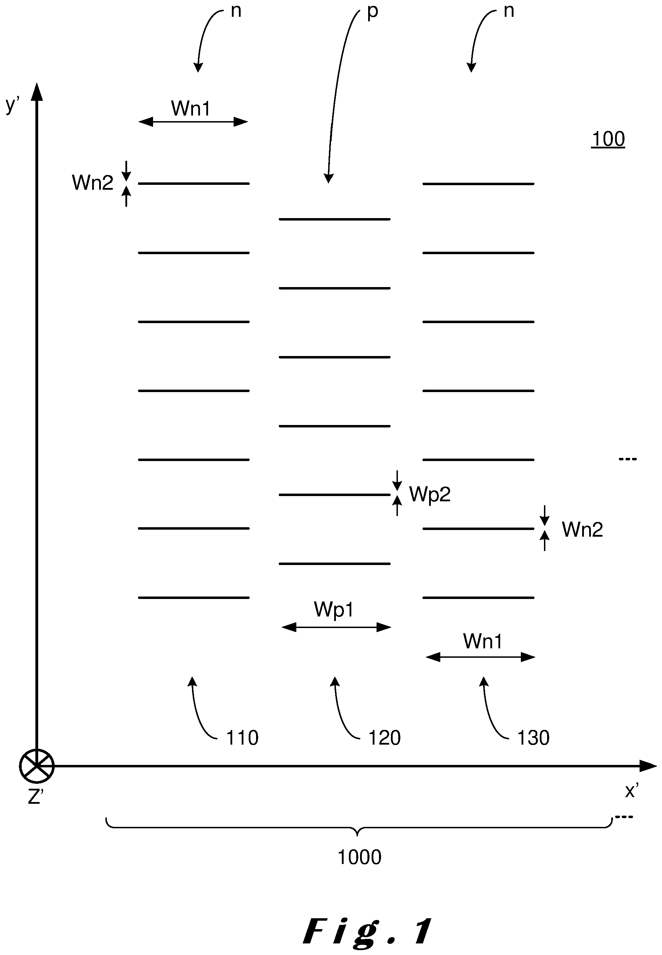

- Figure 1 illustrates the back surface of a photovoltaic device and shows a series of columns of n- and p- type charge collecting structures;
- Figure 2 illustrates a partial view of an embodiment of the invention showing a 2D projection of arrays of double contacting probing tracks in contact with the underlying n and p charge collectors;
- Figure 3 illustrates a detailed vertical cross-section of a support member, also defined as test substrate, comprising arrays of double probing tracks;
- Figure 4 illustrates a support member comprising two sublayers in which embedded electrodes, are arranged that are in electrical contact with contact electrodes, that are probing tracks, to be contacted with the charge collectors of a photovoltaic device;
- Figure 5 shows a support member, possibly a PCB, with embedded contact electrodes arranged at different levels in the support member. The embedded contact electrodes are in electrical contact with probing tracks at the front surface of the support member, through electrical conducting vias. The figure 5 illustrates also horizontal electrical contact lines which form, at least to one lateral side of the support member, lateral electrical contacts allowing to perform current and voltage measurements of a photovoltaic device;
- Figures 6 illustrates a partial view of an embodiment of the invention showing a 2D projection of arrays comprising each three probing tracks in contact with the underlying n and p charge collectors. The figure 6 illustrates schematically also, as dashed lines, at the background underneath the probing tracks, the contacted charge collectors of a photovoltaic device;
- Figure 7 illustrates a supporting chuck in which or to which a contact member is arranged. The supporting chuck may comprise sealing means as illustrated;
- Figure 8 illustrates a second aspect in the invention wherein contact electrodes, that are probing tracks, are arranged in a 2D configuration comprising separate electrodes of opposite n-and p-types arranged in the lateral X and in the longitudinal Y direction;
- Figure 9 shows a vertical cross-section of a support member comprising a group of voltage and current probing contact tracks. The support member may comprise, through its thickness, at least one hole or a plurality of holes to provide a vacuum suction force between the support member and the photovoltaic cell. The figure 9 illustrates also an optional sealing member or gasket arranged on the supporting chuck;
- Figure 10 illustrates a system comprising a photovoltaic cell that is pressed, by applying a force F, against a support member by applying a vacuum between the photovoltaic cell and the support member;
- Figure 11 shows a support member, such as a PCB, comprising an array, each member of the array comprising three elongated contact probing tracks; and
- Figure 12 shows a system in which the support member comprises, to a side, at least 4 contact points to perform current and voltage measurements.

### Detailed description

The present invention will be described with respect to particular embodiments and with reference to certain drawings, but the invention is not limited thereto. The drawings described are only schematic and are non-limiting. In the drawings, the size of some of the elements may be exaggerated and not drawn on scale for illustrative purposes. The dimensions and the relative dimensions do not correspond to actual reductions to the practice of the invention.

It is to be noticed that the term "comprising" in the description and the claims should not be interpreted as being restricted to the means listed thereafter, i.e., it does not exclude other elements.

Reference throughout the specification to "an embodiment" means that a feature, structure or characteristic described in relation with the embodiment is included in at least one embodiment of the invention. Thus, appearances of the wording "in an embodiment" or, "in a variant", in various places throughout the description are not necessarily all referring to the same embodiment, but several. Furthermore, the features, structures or characteristics may be combined in any suitable manner, as would be apparent to a skilled person from this disclosure, in one or more embodiments. Similarly, various features of the invention are sometimes grouped together in a single embodiment, figure or description, for the purpose of making the disclosure easier to read and improving the understanding of one or more of the various inventive aspects. Furthermore, while some embodiments described hereafter include some, but not other features included in other embodiments, combinations of features if different embodiments are meant to be within the scope of the invention, and from different embodiments. For example, any of the claimed embodiments can be used in any combination. It is also understood that the invention may be practiced without some of the numerous specific details set forth. In other instances, not all structures are shown in detail in order not to obscure an understanding of the description and/or the figures.

A horizontal plane herein is defined as a X-Y plane parallel to a front surface of a contact member of the measurement apparatus. The wording "horizontal cross section means a cross section in an X-Y plane. The wording "vertical means" here perpendicular to the plane of a support member and defines a Z-axis. A vertical cross section is a cross section in a X-Z or Y-Z plane that comprises the vertical axis Z.

A longitudinal direction Y is defined as being a direction substantially in the length of groups of contact electrodes of the measurement apparatus. The conducting wires are not necessarily straight wires but may be conducting paths, that may have a sinusoidal shape or comprise curves or steps or other shapes in 2D. A lateral direction is defined as being a direction X orthogonal to the longitudinal direction Y.

A width is defined as a width of a structure across a virtual line in a horizontal plane. Thicknesses are defined herein as thicknesses in the vertical Z-direction.

Herein contact electrodes are also defined as probing tracks. Probing tracks may have different shapes such as straight tracks or curved tracks.

It is understood here that a photovoltaic device may be a single photovoltaic cell or a photovoltaic cell that is arranged on a support to allow easier handling of the photovoltaic cell.

In a first aspect, the invention relates to a measurement apparatus 200 for measuring the current and voltage characteristics of a photovoltaic cell 100, the measurement apparatus 200 comprising a support member 202 defining a front surface 201 and a back surface 203 opposite to said front surface 201. The front surface 201 comprises an edge area 200a defined on a whole circumference of the front surface 201. The support member 202 defines a longitudinal axis Y and a lateral axis X orthogonal to said longitudinal axis Y. A vertical axis Z is defined orthogonal to the X-Y plane.

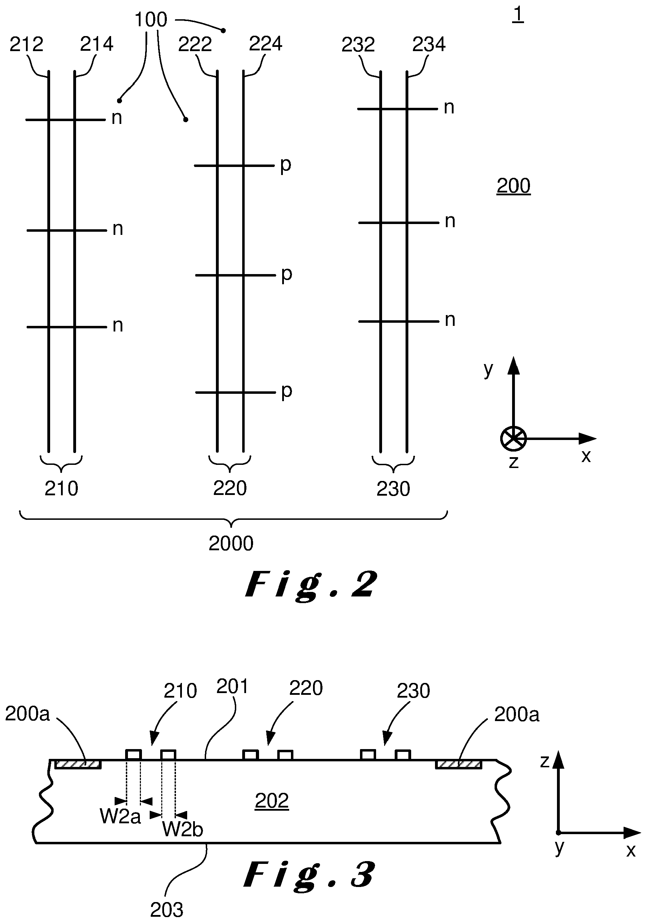

As illustrated in Figure 2, the support member 202 comprises on its front surface 201, along said lateral axis X, a repetitive pattern 2000 of groups 210, 220, 230 of contact electrodes 212, 214, 222, 224, 232, 234, each group 210, 220, 230 extending over a length L1, L2, defined along said longitudinal axis Y and comprising at least two separate measurement electrodes.

In the first aspect of the invention, conducting paths extend mainly in said longitudinal direction and so have a much larger extension in the longitudinal direction Y than in the lateral direction X. Conducting paths may be wires but are preferably either etched out areas of a conducting layer or deposited by i.e., a plating process.

It is understood herein that at least two contact paths per solar cell electrode are used for a resistance-free 4-contact measurement method.

In an embodiment, one measurement electrode 214, 224, 234 of each group 210, 220, 230 has a wider width w2a than the width w2b of the other electrodes 212, 222, 232, the widths w2a, w2b being defined in the lateral direction X. The optional wider paths in this embodiment are used for the current probes to avoid ohmic losses, whereas the thinner paths are used for voltage probes since there are no "ohmic losses".

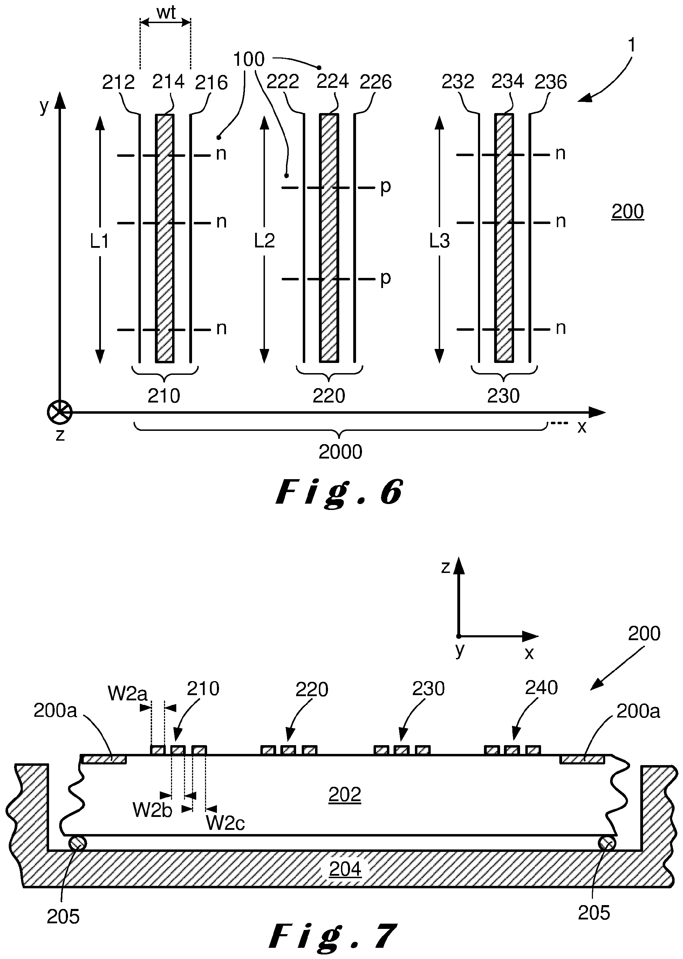

In an advantageous embodiment illustrated in Figure 6 each group 210, 220, 230 comprises at least three longitudinal extended contact paths 212-236. Each group 210, 220, 230 extends over a length L1, L2, L3. The advantage in such an embodiment is to simplify the alignment of the contact paths of the measuring unit to the contacts of the solar cell. To achieve this, the outer group of contact paths (212 + 216, 222 + 226, ...) are used as either voltage or current probe whereas the inner contact path of the group (214, 224,..) is used as the opposite probe.

In an embodiment, one measurement electrode 214, 224, 234 of each group 210, 220, 230 has a wider width w2a than the widths w2b, w2c of the other electrodes 212, 216, 222, 226, 232, 236, the widths w2a, w2b, w2c being defined in the lateral direction X.

In an embodiment, wider contact electrodes 214, 224, 234 have a width w2a between 50µm and 2000µm, preferably between 400µm and 1000µm, and the less wider contact electrodes 212, 222, 232 have a width w2b between 10µm and 1000µm, preferably between 100µm and 300µm.

It is understood that there is no limitation to the type or arrangement or shape of contact designs. For example, photovoltaic devices having much larger and/or broader charge collectors than described herein might be used, requiring larger contact paths than described herein.

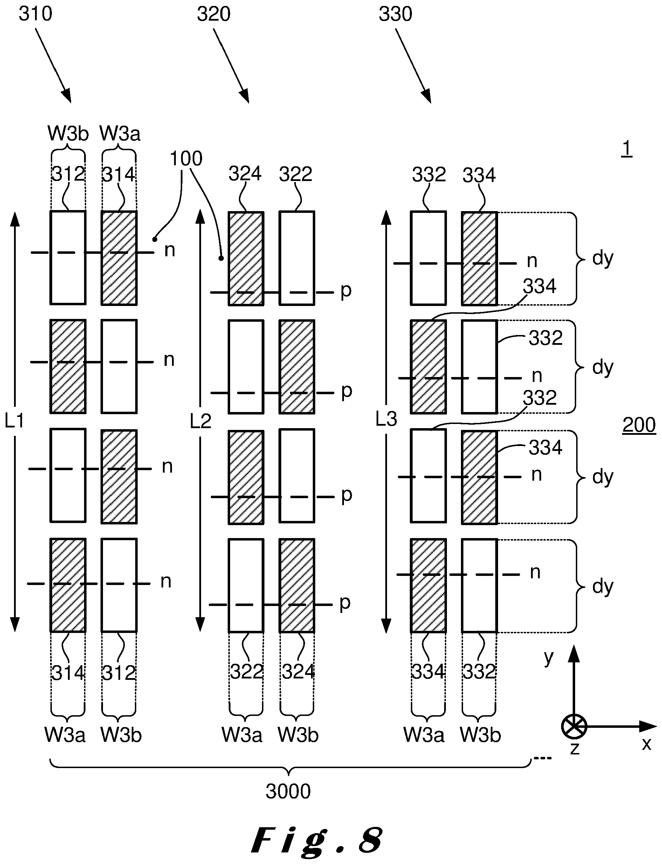

In another aspect of the invention, illustrated in Figure 8, the probing tracks, being contact electrodes, 312, 314, 324, 322, 332, 334 are configured in a 2-dimensional chessboard-like arrangement of contact structures, rather than as longitudinal conducting lines. In such second aspect of the invention, like in said first aspect, the measurement apparatus 200 comprises also a support member 202 defining a front surface 201 and a back surface 203 opposite to said front surface 201, and an edge area 200a to the side of said front surface 202 and on a whole circumference of the support member 202. The support member 202 defines a longitudinal axis Y and a lateral axis X orthogonal to said longitudinal axis Y.

More precisely, in this second aspect of the invention the support member 202 comprises at said front surface 201, along said lateral axis X, a repetitive pattern 3000 of groups 310, 320, 330 of separate contact electrodes 312, 314, 322, 324, 332, 334, arranged in a check-board-type arrangement.

Each group 310, 320, 330 of contact electrodes extends, in the Y-direction, over a length L1, L2, L3, and comprises, in the longitudinal direction Y, a series of separate couples of measurement electrodes 312, 314; 322, 324; 332, 334. The lengths L1, L2, L3 may be identical or different lengths. A first series of contact electrodes 312, 322, 332 are voltage or current probes and a second series 314, 324, 334 are contact electrodes of the opposite type, i.e., current or voltage probes. Said positive and negative contact electrodes face each other, in each group 310, 320, 330 as well in the X direction as in the Y-direction. The positive and negative contact electrodes must not have the same shape. For example, positive electrodes may be circular shaped electrodes and negative contact electrodes may be rectangular shaped electrodes. In variants, the positive and negative contact electrodes may have the same shape, but other dimensions as explained further in embodiments.

In some variants, said series of separate couples of measurement electrodes 312-314; 322-324; 332-334 comprises first wide measurement electrodes 314, 324, 334, used as current probes, having a greater width w3a than the width w3b of the second thin measurement electrode 312, 322, 332, used as voltage probes, the widths w3a, w3b being defined in the lateral X direction. The thinner contact electrodes 312, 322, 332 of each couple of contact electrodes faces, in the longitudinal direction Y and also in the lateral direction X the wider contact electrode 314, 324, 334 of the adjacent couple of contact electrodes 312, 314; 322, 324; 332, 334.

In the embodiments the first series of contact electrodes may have a different shape than the shape of the second series of electrodes, for example a greater width in the Y direction.

In the embodiments, the length dy, defined in the longitudinal direction Y of each of the measurement electrodes 312, 314, 322, 324, 332, 334 is between 100µm and 3000µm, preferably between 500µm and1 500µm and wherein the gap g, defined in the longitudinal direction Y, between each of the measurement electrodes 312, 314, 322, 324, 332, 334 is between 100µm and 3000µm, preferably between 1500µm and 500µm.

In embodiments of said second aspect each group 310, 320, 330 of electrodes may comprise at least 3 columns, defined in the Y direction, of separate and electrically opposite contact electrodes.

In the following sections embodiments are described that may be applied as well to said first as the second aspect of the invention as described before.

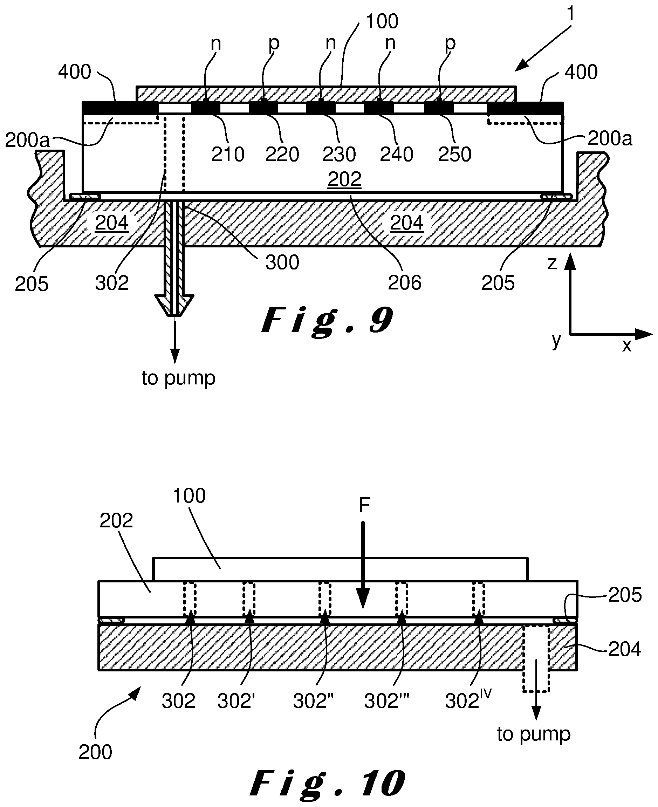

In an embodiment, illustrated in Figure 9, the support member 202 has at least one opening 302 to provide a suction effect provided by, for example, a vacuum pump.

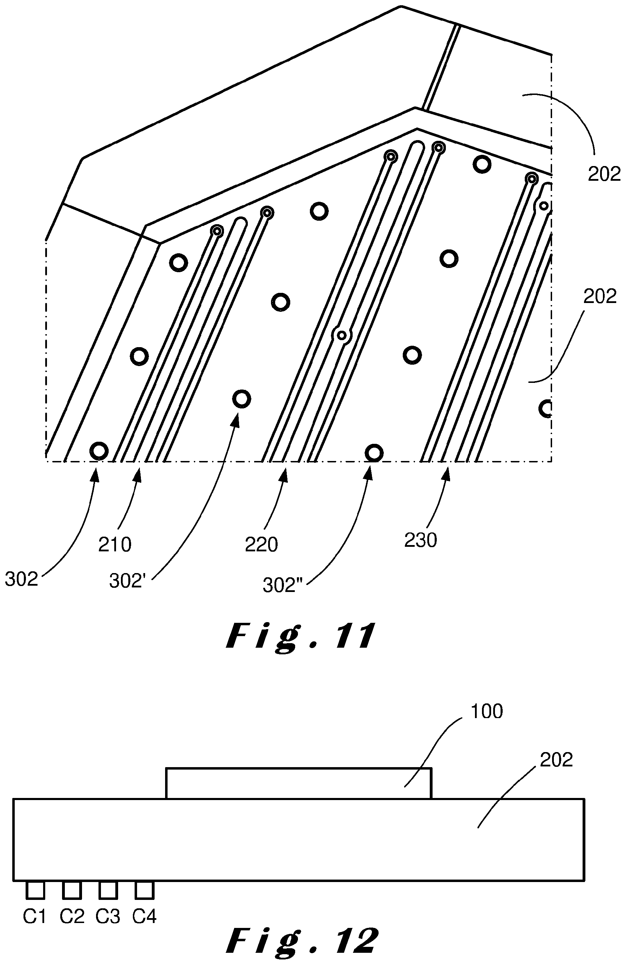

In preferred embodiments, the connection of said at least one opening 302 is not made directly to the vacuum pump, but by a supporting chuck 204 (Figure 9) that is connected to a vacuum pump. That supporting chuck 204 may have one or several grooves opposing the support member 202, preferably a PCB, so as to guarantee a distributed vacuum suction. Alternatively, a roughened surface 203 and/or the supposing surface of the supporting chuck 204 can provide a distributed vacuum. In still another variant a porous member is placed between the supporting chuck 204 and the supporting member 202. The support member 202 has preferably multiple holes 302, 320', 302", as illustrated in Figure 11, to apply an attraction force F by transferring the vacuum to the photovoltaic cell 100 to be measured.

In embodiments, the vacuum is preferably realized over a vacuum channel 206 that covers at least 50% of the lower surface 203 of the contact member. In a variant, not illustrated, vacuum can also be applied under that lower surface 203 by at least 1 vacuum channel, preferably at least 3 vacuum channels, in the support chuck 204. The support chuck 204 can be also equipped by means to heat or cool the support member 202 to establish a certain temperature of the support member 202 and finally also of the photovoltaic cell 100.

In variants, the support member 202 comprises, on said edge area 202a, a sealing member 400. It is understood that the sealing member 400 may be a gasket or a sealing ring or any type of structures or deposited layer that improves the contact of a photovoltaic cell 100 to a support member 202.

In an embodiment, sealing members 205, 400 may be chosen among: film, resist, paint, silicone, metal, ceramic, or rubber with a height in z direction that is preferable greater than 50µm, preferably greater than 0.5mm. A sealing member 205, 400 may be a deposited layer or any elastic structure such as a rubber ring.

A second sealing member 205, arranged into the supporting chuck 204 may be similar as the sealing member of the support member 202 but may also be different. For example, the sealing member 400 of the support member 202, such as a PCB, may be a gasket or deposited or etched layer and the second sealing member 205 may be made of rubber.

In preferable embodiments, contact electrodes 212-334 have widths, in the X-direction, between 50 µm and 0.2mm. In embodiments, wide measurement electrodes in a group 210-230, 310-330 have a width between 400µm and 0.1 mm, and the widths of the thin measurement electrodes have a smaller width that may be between 10µm and 0.5mm or between 300µm and 100µm.

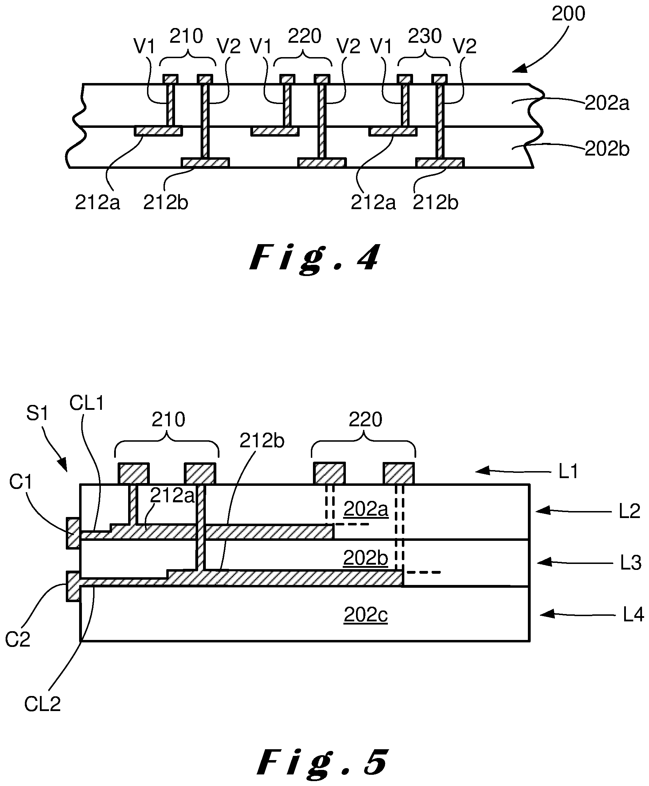

In embodiments, illustrated in Figure 4 and 5, that may be applied to all embodiments and variants of the invention, the test support member 202, that may be a PCB board, has several conductor "levels". Conductor levels L1, L2, L3, L4 are defined as virtual X-Y planes that are located at a predetermined depth d1, d2, d3, d4 relative to said front surface 201, said depths being defined in said Z-direction. For example, as illustrated in Figures 3 the support member 202 may be composed of at least 2 sublayers 202a, 202b, 202c the upper level L1 being the contact layer to establish the electrical contact to the photovoltaic device 100. The conductor levels L1-L4 may be defined on the surface of a sublayer or may be embedded in a sublayer.

For example, in the embodiment illustrated in Figure 4 the support member 202 comprises a first and a second sublayer 202a, 202b. A second level L2 and a third level L3 is defined on the respectively the first sublayer 202a and second sublayer 202b, for example each at an opposite side of the second sublayer 202b.

In the embodiment of Figure 4 and 5, the electrodes 212-232 at the first surface 201, i.e., the first level L1, are contacted to electrodes 212a, 212b located at the second and third level L2, L3 by electrically conducting vias V1, V2. For reasons of clarity of the figure, only one group 210 of connected electrodes are illustrated in Fig.5.

It is understood that the importance of the dimensions of the contact electrodes is related to the fact that the contacting tracks can carry the electrical current. In order to be efficient, they need to have a large cross section. This may be achieved by for example a Cu-layer arranged or deposited under the visible contact electrodes. Thus, the size and shape of the contact electrodes 212-334 at the front surface 201 of the contact member 202 is not so critical, but they need to make a good electrical contact and carry the current to the vias into the layer below.

The conducting paths in the second and third level L2, L3, for example situated at or inside a second sublayer 202b, are electrically separated from each other, as illustrated in Figure 4, to separate positive and negative contacts from each other.

In embodiments, the individual conducting paths dedicated to contact positive and negative contact types of the photovoltaic device and voltage and current probing contact types are preferably interconnected on at least one side S1, S2 of the support member 202 with their according contact type, and this in order to realize a 4-point contact measurement of the solar cell. There are always 4 probing contacts C1-C4 needed to perform 4-point measurements: i.e., C1: a positive voltage contact; C2 a positive current contact; C3: a negative voltage contact and C4: a negative current contact. For reasons of clarity of illustration, Figure 5 only shows 2 of the probe contacts C1, C2.

In embodiments the different "widths" of the voltage and current probe conductors could be realized and defined at said second or third level L2, L3 and not necessarily on the first level L1, i.e., in a plane defined by the contact electrodes 212-334. In such an embodiment, all the contact electrodes 212-334 may have the same shape and/or dimensions.

In embodiments of the support member 202, there could be more than two or more than three levels. For example, in a variant dedicated level of conducting paths may be realized to electrically conduct positive and negative contact types on separated levels, such as illustrated in Figure 3.

In an embodiment of a more advanced realization, there could be different levels for current and voltage contacts, allowing to probe electrically the current and voltage in the photovoltaic device. In such an embodiment 5 levels L1-L5 of contact paths would be required, i.e., one contact level L1 and 4 conducting levels L2-L5 for electrically conducting the positive and negative voltage and current probes.

In embodiments, contacting means may be provided to connect the individual conducting paths 212a, 212b to electrical cables that connect the measurement apparatus 200 to a voltage and current measurement equipment.

In an embodiment, the carrier material of the support member 202 can be a metal core PCB, e.g., Al or a ceramic, which provides the advantage for a very good thermal coupling and thermal device control.

In an embodiment, the support member 202 is made of resin enforced glass-fiber-based materials that has a typical thermal conductivity of about 0.2-0-5 W/(m K). In variants, support members 202 based on IMS (insulated metal substrate) materials, i.e., made of insulated aluminum (Al) metal core, can reach a value of 1-3 W/(m K).

In embodiments, the support member 202 may comprise at least one aperture allowing to visualize alignment marks or features of a photovoltaic device, visible or detectable though such aperture. This allows to provide a quicker and more precise alignment between the measurement device and the photovoltaic device to be tested.

The invention also relates to a measurement system 1, also defined as test system, comprising the measurement apparatus 200, as described, and at least one photovoltaic cell 100 to be measured. In preferred embodiments, the longitudinal axes Y, Y' of the measurement apparatus and the photovoltaic cell 100 are substantially parallel.

In embodiments of the measurement system, the photovoltaic cell 100 is an IBC photovoltaic cell.

In embodiments, the sum of the widths and gaps, defined in the longitudinal direction, of the probing tracks in each group 210-240, 310-340 of probing tracks is smaller than the width, in the X-direction, of the n and p charge collectors of the photovoltaic device 100.

In another aspect, the invention relates also to a method to characterize IBC photovoltaic cells comprising the steps of:
- providing a photovoltaic cell 100, defining a longitudinal axis Y' and a lateral axis X' orthogonal to said longitudinal axis Y', and comprising a repetitive pattern 1000, defined in the direction of the lateral axis X', of successive arrays or lines110, 120, 130 of n-type and p-type electrodes, the arrays or lines 110, 120, 130 being arranged in the longitudinal direction Y';
- providing a measurement apparatus 200 as described;
- aligning by the longitudinal axes Y, Y' and said lateral axes X, X' of said measurement apparatus 200 and said photovoltaic cell (100);
- applying a force F on said support member 202 so that the measurement electrodes 212, 214, 216, 222, 224, 226, 232, 234, 236, 312, 314, 322, 324, 332, 334 of the measurement apparatus 100 as described, comes into firm and electrical contact with the n-type and p-type electrodes of the photovoltaic device 100;
- realising the current and voltage characteristics of the photovoltaic cell 100 by the current and voltage signals provided by said measurement electrodes 212, 214, 216, 222, 224, 226, 232, 234, 236, 312, 314, 324, 322, 332, 334.

It is understood that during the method of characterization, there is always a need for at least 4 contacts C1, C2, C3, C4 to perform the characterization measurement of a photovoltaic cell 100: C1 for positive voltage contact, C2 for positive current contact, C3 for negative voltage contact and C4 for negative current contact. This is illustrated schematically in Figure 12.

In embodiments, the charge collectors of the photovoltaic device may have any shape and may be arranged in different configurations, such as a 2D arrangement of point-like charge collectors.

In an embodiment of the method, said force F is applied by providing a vacuum between said photovoltaic cell 100 and the front surface 201 of said support member 202.

## Claims

1. A measurement apparatus (200) for measuring the current and voltage characteristics of a photovoltaic cell (100), the measurement apparatus (200) comprising a support member (202) defining a front surface (201) and a back surface (203) opposite to said front surface (201), and an edge area (200a) to the side of said front surface (201) defined on a whole circumference of the support member (202), the support member (202) defining a longitudinal axis (Y) and a lateral axis (X) orthogonal to said longitudinal axis (Y),
wherein
the support member (202) comprises, arranged on said front surface (201 and in the direction of said lateral axis (X), a repetitive pattern (2000) of groups (210, 220, 230) of electrically separate probing tracks that extend over a length (L1, L2) defined along said longitudinal axis (Y), each group (210, 220, 230) comprising at least two probing tracks (212, 214, 222, 224, 232, 234).

2. The measurement apparatus (200) according to claim 1 wherein each group (210, 220, 230) comprises at least three probing tracks (212, 214, 216, 222, 224, 226, 232, 234, 236) that extend over a length (L1, L2, L3) defined along said longitudinal axis (Y).

3. The measurement apparatus (200) according to claim 1 or claim 2 wherein at least one probing track (214, 224, 234) of each group (210, 220, 230) has a wider width (w2a) than the width (2b) the other probing track or probing tracks (212, 222, 232), the widths (w2a, w2b) being defined in the lateral direction (X).

4. A measurement apparatus (200) for measuring the current and voltage characteristics of a photovoltaic cell (100), the measurement apparatus (200) comprising a support member (202) defining a front surface (201) and a back surface (203) opposite to said front surface (201), and an edge area (200a) to the side of said front surface (201) and on a whole circumference of the support member (202), the support member (202) defining a longitudinal axis (Y) and a lateral axis (X) orthogonal to said longitudinal axis (Y),
wherein
the support member (202) comprises, along said lateral axis (X), a repetitive pattern (3000) of groups (310, 320, 330) of separate probing track (312, 314, 322, 324, 332, 334), each group (310, 320, 330) extending over a length (L1, L2, L3) defined along said longitudinal axis (Y), and comprising in the longitudinal direction (Y) a series of at least two electrically isolated probing tracks (312, 314),(322, 324), (332, 334).

5. The measurement apparatus (200) according to claim 4 wherein said series of separate probing tracks (312, 314), (322, 324),(332, 334) comprises first wide contact tracks (314, 324, 334) having a greater width (w3a) than the width (w3b) of the thinner probing track (312, 322, 332), the widths (w3a, w3b) being defined in the lateral (X) direction,
and wherein the thinner probing track (312, 322, 332) of each couple of probing tracks faces, in the longitudinal direction (Y), the wider probing track (314, 324, 334) of the adjacent couple of probing tracks (312, 314; 322, 324; 332, 334).

6. The measurement apparatus (200) according to claim 5 wherein each group (310, 320, 330) comprises at least three different types of probing tracks.

7. The measurement apparatus (200) according to any one of claims 1 to 6 wherein the support member (202) is a printed circuit board (PCB).

8. The measurement apparatus (200) according to any one of claims 1 to 7 wherein the support member (202) comprises embedded electrical contact paths (212a, 212b) that are connected by electrically conducting vias (V1, V2, V3) to said groups (210-340) of contact electrodes (212-336),
the electrical contact paths (212a, 212b) being arranged in said contact member (202) in at least two different depth levels (L1, L2, L3, L4), each depth level being defined at a predetermined depth (0, d1, d2, d3, d4) relative to said front surface (201), each electrical contact path (212a, 212b) being electrically contacted to said probing tracks (212-336) through said electrically conducting vias (V1, V2, V3).

9. The measurement apparatus (200) according to claim 8 wherein said embedded electrical contact paths (212a, 212b) extend up to at least one side of the support member (202), providing at said side at least four probing contacts (C1, C2, C3, C4) to perform current and voltage measurements of a photovoltaic device (100).

10. The measurement apparatus (200) according to any one of claims 1 to 9 wherein the support member (202) has at least one opening (302) configured to be connected, by vacuum connecting means, with a vacuum pump.

11. The measurement apparatus (200) according to any one of claim 1 to 10 wherein the support member (202) comprises, arranged on said edge area (202a), a sealing member (400) configured to assure a vacuum between the support member (202) and a photovoltaic cell (100) to be tested, the sealing member (400) being chosen preferably among: a polymer film, a resist, a paint, silicone, and having a thickness, defined perpendicular to said front surface (201), comprised between 1µm and 200µm, preferably between 1 µm and 70 µm.

12. A test system (1) comprising the measurement apparatus (200) according to any one of claims 1 to 11 and a photovoltaic cell (100) to be measured.

13. A method to characterise IBC photovoltaic cells comprising the steps of:
- providing a photovoltaic cell (100), defining a longitudinal axis (Y') and a lateral axis (X') orthogonal to said longitudinal axis (Y'), and comprising a repetitive pattern (1000), defined in the direction of the lateral axis (X'), of successive arrays or lines (110, 120, 130) of n-type and p-type electrodes, the arrays (110, 120, 130) being arranged in the longitudinal direction (Y');
- providing a measurement apparatus (200) according to any one of claims 1 to 11;
- aligning said support member (202) and said photovoltaic cell (100) and assuring that all of the n and p-electrodes of the photovoltaic device (100) are in contact with the current and voltage probing tracks (212-334);
- applying a force F between said photovoltaic cell (100) and said support member (202) so that the probing tracks (212, 214, 216, 222, 224, 226, 232, 234, 236, 312, 314, 324, 322, 332, 334) of said contact member (202) come into electrical contact with the n-type and p-type electrodes of the photovoltaic cell (100);
- realising the current and voltage characteristics of the photovoltaic cell (100) by the current and voltage signals provided by said probing tracks (212, 214, 216, 222, 224, 226, 232, 234, 236, 312, 314, 322, 324, 332, 334).

14. The method according to claim 13 wherein the force F is applied by providing a vacuum between said photovoltaic cell (100) and the front surface (201) of said support member (202).
